# EUROPEAN PATENT APPLICATION

(11) **EP 4 597 310 A1**
(43) Date of publication of application: **06.08.2025**
(21) Application number: 23887608.0
(22) Date of filing: 01.09.2023
(51) Int. Cl.: G06F 9/4401, G06F 8/65, G06F 9/445

(54) **CONFIGURATION METHOD FOR BASIC INPUT OUTPUT SYSTEM (BIOS) CONFIGURATION ITEMS, AND SERVER**

(30) Priority: 07.11.2022 CN 202211385564
(71) Applicant: xFusion Digital Technologies Co., Ltd., Zhengzhou, Henan 450046 (CN)
(72) Inventor: WEN, Chaoying, Zhengzhou, Henan 450046 (CN)
(74) Representative: MERH-IP Matias Erny Reichl Hoffmann Patentanwälte PartG mbB
(86) International application number: PCT/CN2023/116589
(87) International publication number: WO 2024/098914

(57) **Abstract**

Embodiments of the present application provide a configuration method and a server for a configuration item of a Basic Input Output System (BIOS), which relate to the field of basic input output system technologies. In this method, after an out-of-band controller determines content to be configured for the target configuration item that supports online modification, when a Central Processing Unit (CPU) runs an operating system (OS), the out-of-band controller sends a system management interrupt (SMI) signal to the CPU to instruct the CPU to switch from running the OS to running the BIOS, and when the CPU runs the BIOS, configure the content to be configured for the target configuration item, thereby achieving the modification of the target configuration item. Since the system management interrupt signal may also instruct the CPU to resume running the OS after the CPU completes the configuration of the target configuration item, the target configuration item may be modified without a system restart. This enables the modification of the target configuration item while maintaining the server's service online continuously.

## Description

This application is a continuation of International Application No.PCT/CN2023/116589, filed on September 1, 2023, which claims priority to Chinese Patent Application No. 202211385564.2, filed on November 7, 2022 and entitled " CONFIGURATION METHOD AND SERVER FOR BASIC INPUT OUTPUT SYSTEM CONFIGURATION ITEM", which is incorporated herein by reference in its entirety.

### TECHNICAL FIELD

The present application relates to the field of basic input output system technologies, and in particular, to a configuration method and a server for a Basic Input Output System (BIOS) configuration item.

### BACKGROUND

ABasic Input Output System (basic input output system, BIOS) is a program embedded into a BIOS chip on a mainboard, and the main function of the BIOS is to provide hardware settings and control for a server. In addition, the BIOS provides users with various configuration items, and by modification of content of these configuration items, the operating status of the server may be controlled.

In relevant technologies, when configuration content of a BIOS configuration item needs to be modified after an operating system (operating system, OS) on the server is started, and the OS needs to be restarted, so that the configuration content of the configuration item is modified while the BIOS runs. Then, the OS is restarted again, and the BIOS performs modification operation to make the modification of the BIOS configuration item take effect.

In other words, when the configuration content of the BIOS configuration item needs to be modified after the OS is started, the server needs to be restarted twice for the modification of the BIOS configuration item to take effect. As a result, services running on the server will be interrupted, severely affecting service performance of the server.

### SUMMARY

Embodiments of the present application provides a configuration method and a server for a Basic Input Output System (BIOS) configuration item, which enables modification of a BIOS configuration item without a system restart, helping to avoid interruption of services running on the server.

To achieve the above purpose, the embodiments of the present application adopt following technical solutions:

According to a first aspect, the embodiments of the present application provides a configuration method for a Basic Input Output System configuration item for the server that includes a CPU and an out-of-band controller. The method is implemented by the out-of-band controller. The method includes: determining content to be configured for the target configuration item in a BIOS configuration item, where the target configuration item is a configuration item that supports online modification in the BIOS configuration item, and sending a system management interrupt (SMI) signal to the CPU when the CPU runs the OS, where the system management interrupt signal is configured to instruct the CPU to switch from running the OS to running the BIOS, when the CPU runs the BIOS, acquire the configuration content to be configured and configure the content of the target configuration item as the content to be configured, and resume running the OS when the CPU completes the configuration of the target configuration item.

In this solution, after the out-of-band controller determines the content to be configured for the target configuration item, when the CPU runs the OS, the controller sends a system management interrupt signal to the CPU to instruct the CPU to switch from running the OS to running the BIOS, and configure the content of the target configuration item as the content to be configured while the CPU runs the BIOS, thereby achieving the modification of the configuration content of the target configuration item. Since the system management interrupt signal may also instruct the CPU to resume running the OS after the CPU completes the configuration of the target configuration item, the target configuration item may be modified without the system restart. This enables modification of the target configuration item while maintaining the server's service online continuously.

Therefore, on the one hand, when defects are found in a BIOS chip or BIOS features, the content to be configured may be modified for the target configuration item, ensuring that unfit or defective features are disabled while maintaining the server's service online continuously. On the other hand, the target configuration item may also be reconfigured based on whether the service is in peak or valley operating state. For example, when the service is in peak state, by modifying the content to be configured for the target configuration item, the content to be configured indicates disabling of the energy saving feature, so that the server runs in high-performance mode. When the service is in valley state, by modifying the content to be configured for the target configuration item to instruct the enabling of the energy saving feature, thereby achieving energy conservation and emission reduction effects. Besides, different server operation scenarios have different requirements for energy efficiency optimization, the content to be configured for the target configuration item may be modified based on the current operating scenario of the server, which matches a type of energy efficiency optimization indicated by the content to be configured with the current operating scenario. This enables configuration of an energy efficiency optimization mode that matches with the current operating scenario for the server while maintaining the server's service online continuously.

In a possible implementation, determining the content to be configured for a target configuration item in the BIOS configuration item includes: sending interface configuration information to a terminal device, where the interface configuration information is configured to display a configuration interface by the terminal device, and the configuration interface includes the target configuration item, and receiving the content to be configured for the target configuration item sent by the terminal device, where the content to be configured is determined by the terminal device in response to the configuration operation for the target configuration item on the configuration interface.

In this implementation, a specific implementation method is provided for determining the content to be configured for the target configuration item. In this method, the out-of-band controller sends interface configuration information to the terminal device, so that the terminal device may display the target configuration item. In this way, the terminal device may determine the content to be configured for the target configuration item by the configuration operation for the target configuration item. Then, the out-of-band controller determines the content to be configured for the target configuration item by receiving the content to be configured returned by the terminal device. With this method, users do not have to understand programming languages and only need to perform configuration operation on the configuration interface. The out-of-band controller may then determine the content to be configured for the target configuration item. The process is simple and convenient, with lower user requirements.

In another possible implementation, determining the content to be configured for a target configuration item in the BIOS configuration item includes: in response to a request from the terminal device, sending an identifier of the target configuration item to the terminal device, and receiving the content to be configured sent by the terminal device, where the content to be configured is determined by the terminal device based on the identifier of the target configuration item.

In this implementation, a specific implementation method is provided for determining the content to be configured for the target configuration item. In this method, the out-of-band controller sends the identifier of the target configuration item to the terminal device, so that the user may understand which BIOS configuration item supports online modification. Then, the out-of-band controller determines the content to be configured for the target configuration item by receiving the content to be configured returned by the terminal device. In this method, the out-of-band controller only needs to send the identifier of the target configuration item to the terminal device to determine the content to be configured for the target configuration item, simplifying the control logic of determining the content to be configured for the target configuration item for the out-of-band controller, which help in reducing the requirements for the out-of-band controller.

In another possible implementation, the method further includes: receiving a set of configuration items sent by the CPU, where the set of configuration items is a collection of configuration items that support online modification in the current BIOS version, and the set of configuration items includes the target configuration item and is sent during the BIOS boot process.

In this implementation, during the BIOS boot process, the out-of-band controller receives the set of configuration items that support online modification in the current BIOS version sent by the CPU. On the one hand, this enables the out-of-band controller to determine, based on the set of configuration items, which BIOS configuration items support online modification. On the other hand, since the set of configuration items is the collection of items that support online modification in the current BIOS version, this helps in ensuring that the determined target configuration item matches the current BIOS version.

In another possible implementation, the method further includes: receiving a configuration result of target options returned by the CPU, where the configuration result is used to indicate whether the configuration content of the target configuration item succeeds or fails, and the configuration result is sent when the CPU runs the BIOS.

In this implementation, while the CPU runs the BIOS, the out-of-band controller determines whether the target configuration item has been updated to the content to be configured by receiving the configuration result returned by the CPU. This helps the out-of-band controller to promptly grasp whether the configuration of the target configuration item has been updated.

In another possible implementation, the server also includes a BIOS chip that stores the configuration content of the BIOS configuration item. The method further includes: receiving the acquisition request sent by the CPU, the acquisition request is sent by the CPU during the BIOS boot process, where the acquisition request is configured to request the content configured of the target configuration item, and when the configuration result indicates that the configuration of the target configuration item succeeds, sending the content to be configured to the CPU, where the content to be configured is used to modify the configuration content of the target configuration item in the BIOS chip to the content to be configured.

In this implementation, when the server restarts, during the boot process of the BIOS, the out-of-band controller returns the content to be configured to the CPU based on the acquisition request of the CPU, so that the CPU may modify the configuration content of the target configuration item in the BIOS chip to the content to be configured. As a result, the BIOS may configure the server settings based on the content to be configured for the target configuration item in the BIOS chip, so that after the server restarts, it may automatically restore its pre-restart configuration without the need for reconfiguration.

According to a second aspect, the embodiments of the present application provide a method for configuring a Basic Input Output System configuration item, where the method is used for a server which includes a CPU and an out-of-band controller. The method is executed by the CPU. The method includes: the CPU receiving a system management interrupt signal and performing the following operations based on the system management interrupt signal when the CPU runs the OS: the CPU switching from running the OS to running the BIOS, when the CPU runs BIOS, the CPU acquiring the content to be configured from the out-of-band controller and configuring the content for the target configuration item as the content to be configured, where the target configuration item is a configuration item that supports online modification in the BIOS configuration item, and the CPU resuming running the OS when the CPU completes the configuration of the target configuration item.

In this solution, when the CPU runs the OS, the CPU receives the system management interrupt signal sent by the out-of-band controller, switches from running the OS to running the BIOS as instructed by the system management interrupt signal, then acquires the content to be configured for the target configuration item from the out-of-band controller, and configures the content of the target configuration item to the content to be configured, thereby modifying the configuration content of the target configuration item. As the system management interrupt signal also instructs the CPU to resume running the OS after the CPU completes the configuration of the target configuration item, the content configured for the target configuration item may be modified without the system restart. This enables modification of the target configuration item while maintaining the server's service online continuously.

It should be noted that other technical effects of the second aspect may be referred to in the first aspect and are not elaborated here.

In a possible implementation, during the boot process of the BIOS, the method further includes: the CPU sending a set of configuration items to the out-of-band controller, where the set of configuration items is a collection of configuration items that support online modification in the current BIOS version, and the set of configuration items includes the target configuration item.

In this implementation, during the BIOS boot process, the CPU sends the set of configuration items to the out-of-band controller. On the one hand, this enables the out-of-band controller to determine, based on the set of configuration items, which BIOS configuration items support online modification. On the other hand, since the set of configuration items is the collection of items that support online modification in the current BIOS version, this helps in ensuring that the determined target configuration item matches the current BIOS version.

In another possible implementation, while the CPU runs the BIOS, the method further includes: the CPU sending the configuration result of the target configuration item to the out-of-band controller, where the configuration result is used to indicate whether the configuration of the target configuration item succeeds or fails.

In this implementation, while the CPU runs the BIOS, the CPU sends the configuration result of the target configuration item to the out-of-band controller, so that the out-of-band controller may determine, based on the configuration result, whether the configuration content of the target configuration item has been updated. This helps the out-of-band controller to promptly grasp whether the configuration content of the target configuration item has been updated.

In another possible implementation, the server also includes a BIOS chip that stores the configuration content of the BIOS configuration item. During the boot process of the BIOS, the method further includes: the CPU sending an acquisition request to the out-of-band controller, where the acquisition request is configured to request the content configured of the target configuration item, the CPU receiving the content to be configured returned by the out-of-band controller, and the CPU modifying the configuration content of the target configuration item in the BIOS chip to the content to be configured.

In this implementation, when the server restarts, during the boot process of the BIOS, the CPU sends an acquisition request to the out-of-band controller to request the content configured of the target configuration item. Then, based on the content to be configured returned by the out-of-band controller, the CPU modifies the configuration content of the target configuration item in the BIOS chip to the content to be configured. As a result, the BIOS may configure the server settings based on the content to be configured configured of the target configuration item in the BIOS chip, so that after the server restarts, it may automatically restore its pre-restart configuration without the need for reconfiguration.

According to a third aspect, the embodiments of the present application provide an apparatus for configuring a Basic Input Output System configuration item, comprising: functional units for implementing any method provided in the first aspect, where an action performed by each functional unit is implemented by hardware or by hardware executing the corresponding software. For example, the apparatus for configuring the Basic Input Output System configuration item may include a processing unit and a sending unit. The processing unit is configured to determine the content to be configured for the target configuration item in the BIOS configuration item, where the target configuration item is a configuration item that supports online modification in the BIOS configuration item. The sending unit is configured to send a system management interrupt signal to the CPU when the CPU runs the OS, where the system management interrupt signal is used to instruct the CPU to switch from running the OS to running the BIOS, when the CPU runs the BIOS, acquire the content to be configured and configure the content of the target configuration item as the content to be configured, and resume running the OS when the CPU completes the configuration of the target configuration item.

According to a fourth aspect, the embodiments of the present application provide an apparatus for configuring a Basic Input Output System configuration item, comprising: functional units for implementing any method provided in the second aspect, where an action performed by each functional unit is implemented by hardware or by hardware executing the corresponding software. For example, the apparatus for configuring the Basic Input Output System configuration item may include a receiving unit and a processing unit. The receiving unit is configured to receive a system management interrupt signal when the CPU runs the OS, and the processing unit is configured to perform the following operations based on the system management interrupt signal: controlling the CPU to switch from running the OS to running the BIOS, when the CPU runs the BIOS, controlling the CPU to acquire the content to be configured for the target configuration item from the out-of-band controller, controlling the CPU to configure the content of the target configuration item as the content to be configured, where the target configuration item is a configuration item that supports online modification in the BIOS configuration item, and when the CPU completes the configuration of the target configuration item, controlling the CPU to resuming running the OS.

According to a fifth aspect, the embodiments of the present application provide a server, comprising a processor and a memory. The processor is connected to the memory. The memory is configured to store a computer-executable instruction, and the processor executes the computer-executable instruction stored in the memory, thereby implementing any method provided in the first aspect or the second aspect.

According to a sixth aspect, the embodiments of the present application provide a system for configuring a Basic Input Output System configuration item, comprising a CPU and an out-of-band controller, where the CPU is connected to the out-of-band controller. The out-of-band controller is configured to implement any method provided in the first aspect, while the CPU is configured to implement any method provided in the second aspect.

According to a seventh aspect, the embodiments of the present application provide a system for configuring a Basic Input Output System configuration item. The system includes a terminal device and a server, and the terminal device is connected to the server. The terminal device is configured to generate the content to be configured for the target configuration item in the Basic Input Output System configuration item and send the content to the server, where the target configuration item is a configuration item that supports online modification in the Basic Input Output System configuration item. The server is configured to implement any method provided in the first aspect or the second aspect based on the received content to be configured for the target configuration item.

According to an eighth aspect, the embodiments of the present application provide a system for configuring a Basic Input Output System configuration item. The system includes a terminal device and a server, and the terminal device is connected to the server. The server includes a CPU and an out-of-band controller. The out-of-band controller is configured to determine the content to be configured for the target configuration item in the target configuration item in the BIOS configuration item, where the target configuration item is a configuration item that supports online modification in the BIOS configuration item. The out-of-band controller is also configured to send a system management interrupt signal to the CPU when the CPU runs the OS. The CPU is configured to receive the system management interrupt signal and performs the following operations based on the system management interrupt signal: the CPU switching from running the OS to running the BIOS, when the CPU runs the BIOS, the CPU acquiring the content to be configured for the target configuration item from the out-of-band controller and configuring the content of the target configuration item as the content to be configured, where the target configuration item is a configuration item that supports online modification in the BIOS configuration item, and the CPU resuming running the OS when the CPU completes the configuration of the target configuration item.

Optionally, the out-of-band controller is further configured to: send interface configuration information to the terminal device, where the interface configuration information is configured to display the configuration interface by the terminal device, and the configuration interface includes the target configuration item; and receive the content to be configured for the target configuration item sent by the terminal device, where the content to be configured is determined by the terminal device in response to the configuration operation for the target configuration item on the configuration interface.

Optionally, the terminal device is configured to: receive interface configuration information, display a configuration interface based on the interface configuration information, and the configuration interface includes the target configuration item; determine the content to be configured for the target configuration item in response to the configuration operation for the target configuration item on the configuration interface, and send the content to be configured for the target configuration item to the out-of-band controller.

Optionally, the out-of-band controller is also configured to: send the identifier of the target configuration item in response to a request from the terminal device, and receive the content to be configured for the target configuration item sent by the terminal device, where the content to be configured is determined by the terminal device based on the identifier of the target configuration item.

Optionally, the terminal device is configured to: receive the identifier of the target configuration item, determine the content to be configured based on the identifier of the target configuration item, and send the content to be configured for the target configuration item to the out-of-band controller.

Optionally, during the boot process of the BIOS, the CPU is also configured to: send a set of configuration items to the out-of-band controller. The set of configuration items is a collection of configuration items that support online modification in the current BIOS version, and the set of configuration items includes the target configuration item.

Optionally, the out-of-band controller is also configured to: receive a set of configuration items sent by the CPU. The set of configuration items is a collection of configuration items that support online modification in the current BIOS version, and the set of configuration items includes the target configuration item.

Optionally, while the CPU runs the BIOS, the CPU is also configured to: send the configuration result of the target configuration item to the out-of-band controller, where the configuration result indicates whether the configuration of the target configuration item succeeds or fails.

Optionally, the out-of-band controller is also configured to: receive the configuration result of the target configuration item returned by the CPU, where the configuration result indicates whether the configuration of the target configuration item succeeds or fails.

Optionally, the server also includes a BIOS chip that stores the configuration content of the BIOS configuration item. During the boot process of the BIOS, the CPU is further configured to: send an acquisition request to the out-of-band controller, where the acquisition request is configured to request the content configured for the target configuration item, receive the content to be configured returned by the out-of-band controller, and modify the configuration content of the target configuration item in the BIOS chip to the content to be configured.

Optionally, the out-of-band controller is also configured to: receive an acquisition request sent by the CPU, where the acquisition request is configured to request the content configured for the target configuration item, and send the content to be configured to the CPU when the configuration result indicates that the configuration succeeds. The content to be configured is configured to modify the configuration content of the target configuration item in the BIOS chip to the content to be configured.

According to a ninth aspect, the embodiments of the present application provide a chip, comprising a processor and an interface circuit. The interface circuit is configured to receive a code instruction and transmit it to the processor. The processor is configured to execute the code instruction to implement any method provided in the first aspect or the second aspect.

According to a tenth aspect, the embodiments of the present application provide a computer-readable storage medium that stores the computer-executable instruction. When the computer-executable instruction is run on a computer, the computer-executable instruction enables the computer to implement any method provided in the first aspect or the second aspect.

According to an eleventh aspect, the embodiments of the present application provide a computer program product, comprising the computer-executable instruction, when the computer-executable instructions are run on a computer, the instruction enables the computer to implement any method provided in the first aspect or the second aspect.

The technical effects of any of the implementation methods from the third to the eleventh aspects may be referred to in the different implementation methods of the first aspect or the second aspect and are not elaborated here.

### BRIEF DESCRIPTION OF DRAWINGS

FIG. 1 is a system architecture diagram of a server according to embodiments of the present invention;
FIG. 2 is a schematic diagram of a system for configuring a BIOS configuration item according to embodiments of the present invention;
FIG. 3 is a flowchart of a method for configuring a BIOS configuration item according to embodiments of the present invention;
FIG. 4 is a flowchart of another method for configuring a BIOS configuration item according to embodiments of the present invention;
FIG. 5 is a schematic diagram of a configuration interface according to embodiments of the present invention;
FIG. 6 is a flowchart of another method for configuring a BIOS configuration item according to embodiments of the present invention;
FIG. 7 is a schematic diagram of an apparatus for configuring a BIOS configuration item according to embodiments of the present invention; and
FIG. 8 is a schematic diagram of another apparatus for configuring a BIOS configuration item according to embodiments of the present invention.

### DESCRIPTION OF EMBODIMENTS

Technical solutions of embodiments of the present application will now be described in detail with reference to accompanying drawings.

In descriptions of the present application, unless otherwise specified, "/" means "or". For example, A/B may represent A or B. In this specification, "and/or" describes only an association relationship between associated objects, and represents that three relationships may exist. For example, A and/or B may represent the following three cases: Only A exists, both A and B exist, and only B exists, where A and B may be singular or plural.

Furthermore, unless otherwise specified in the descriptions of the present application, "a plurality of" represents two or more. "At least one" or similar expressions represent any combination of items, including any combination of single or plural items. For example, at least one of a, b, or c may represent a, b, c, a and b, a and c, b and c, or a, b, and c, where each of a, b, and c may be singular or plural.

In addition, to clearly describe technical solutions in the embodiments of the present application, terms such as "first" and "second" are used to distinguish between same items or similar items that have basically the same functions or purposes. A person skilled in the art may understand that terms such as "first" and "second" do not limit a quantity or an execution sequence, and terms such as "first" and "second" do not mean being definitely different. Besides, in the embodiments of the present application, the words "exemplary" or "for example" represent examples, illustrations, or descriptions. Any embodiment or design described in the embodiments of the present application as "exemplary" or "for example" should not be explained as being preferred or advantageous compared to other embodiments or designs. Specifically, the use of terms such as "exemplary" or "for example" is intended to present relevant concepts in a concrete way for ease of understanding.

First, an example introduction to the application scenarios of the embodiments of the present application is provided.

A Basic Input Output System (BIOS) is a program embedded into a BIOS chip on a mainboard, and a main function of the BIOS is to provide hardware settings and control for a server. In addition, the BIOS provides users with various configuration items, and by modification of configuration content of these configuration items, operating status of the server may be controlled. The BIOS is delivered with default settings, but the server has different energy efficiency optimization needs in different scenarios. Modifying content of the BIOS configuration items enables the server's operation to align with the current scenario.

In relevant technologies, when configuration content of a BIOS configuration item needs to be modified after the OS is started, the OS needs to be restarted before the configuration content of the BIOS configuration item is modified while the BIOS runs. Then, the OS is restarted again, and the BIOS performs modification operation to make the modification of the BIOS configuration item take effect.

In other words, when configuration content of a BIOS configuration item needs to be modified after the OS is started, the OS needs to be restarted twice for the modification of the BIOS configuration item to take effect. As a result, there will be service interruptions, severely affecting the normal operation of the server.

Therefore, the embodiments of the present application provide a method for configuring the Basic Input Output System configuration item. After the out-of-band controller determines content to be configured for the target configuration item, when the CPU runs the OS, the controller sends a system management interrupt (SMI) signal to the CPU. The signal instructs the CPU to switch from running the OS to running the BIOS, and configure the target configuration item to the content to be configured while the CPU runs the BIOS, thereby achieving the modification of the configuration content of the target configuration item. Since the system management interrupt signal may also instruct the CPU to resume running the OS after the CPU completes the configuration of the target configuration item on the BIOS, the target configuration item may be modified without a system restart. This enables modification of the target configuration item while maintaining the server's service online continuously.

Second, an example introduction to a system architecture of the embodiments of the present application is provided.

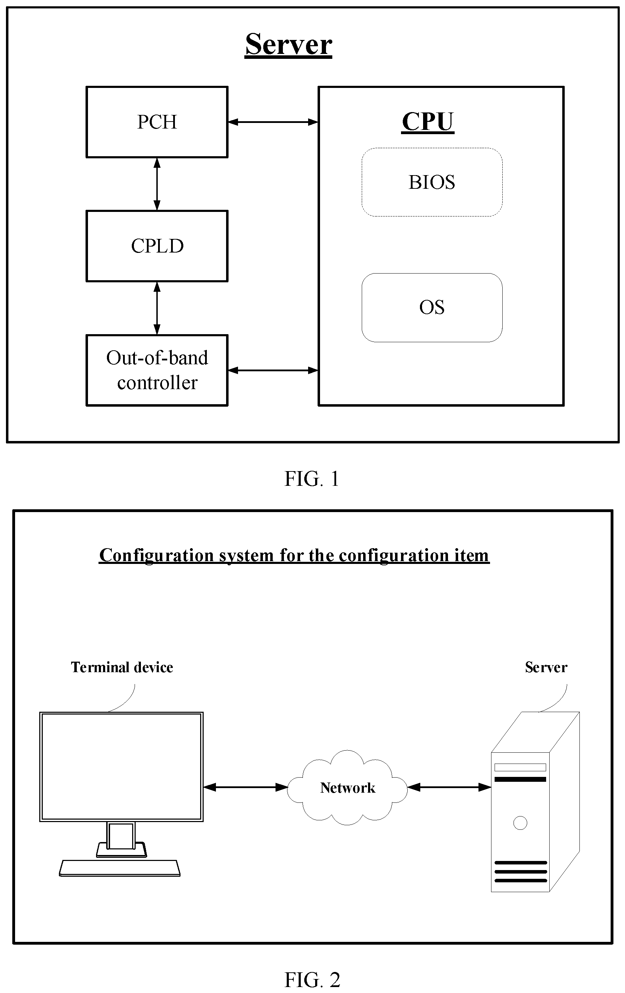

FIG. 1 is a system architectural diagram of a server provided by the embodiments of the present application.

Hardware of the server includes a central processing unit (central processing unit, CPU), system management random access memory (system management random access memory, SMRAM), and an out-of-band controller.

Software of the server includes a BIOS and an OS. The OS and the BIOS are run by the CPU.

The OS includes the OS program code and may be Linux, Windows, vxWarks, or others.

In the embodiments of the present application, the OS is mainly used for running services and managing energy consumption.

The BIOS, loaded onto the server's hardware system, is the most fundamental software code used for power-on, self-test, CPU initialization, memory initialization, detection of input/output devices and bootable devices, and ultimately, boot of the OS. That is, after the server is powered on, the BIOS is first started. Then, the BIOS guides the OS to boot.

The boot process of the BIOS mainly includes following seven phases:

Validation (security, SEC) phase, Pre-EFI Initialization (pre-efi initialization environment, PEI) phase, Driver Execution Environment (driver execution environment, DXE) phase, Boot Device Select (boot device select, BDS) phase, Transient System Load (transient system load, TSL) phase, runtime (runtime, RT) phase, and After Life (after life, AL) phase.

In the method provided by the embodiments of the present application, the BIOS is mainly used to report information about the configuration item that supports online modification to the out-of-band controller, as well as to configure the target configuration item that supports online modification to the content to be configured.

The system management random access memory is configured to store the CPU context before the CPU enters a System Management Mode (SMM), and programs to be executed after the CPU enters the System Management Mode (such as SMM handlers instructed by the system management interrupt).

The out-of-band controller allows remote maintenance and management of the server through a dedicated data channel. The out-of-band controller is completely independent of the server's CPU, BIOS, and OS, and may communicate with the BIOS and OS (or OS management unit) running on the CPU through an out-of-band management interface of the server.

In the method provided by the embodiments of the present application, the out-of-band controller is mainly used to send interface configuration information and the identifier of the target configuration item to the terminal device, to deliver the content to be configured for the target configuration item to the BIOS, and to store a configuration configuration result of the target configuration item.

For example, the out-of-band controller may include a monitoring management unit outside the server, a management system in a management chip outside the processor, a baseboard management controller (BMC) of the server, an SMM module, and others. It should be noted that the specific form of the out-of-band controller in the embodiments of the present application is not limited, and the previous example is only for illustrative purposes. In the following embodiments, the out-of-band controller is exemplified by a BMC.

It should be noted that different servers have different names for the BMC. For example, it is called the BMC for some servers, Integrated Lights-Out (iLO) for some other servers, and the integrated Dell Remote Access Controller (iDRAC) for others. Whether it is called BMC, iLO, or iDRAC, it may be understood as the BMC in the embodiments of this invention.

In some embodiments, the server also includes a southbridge (Platform Controller Hub, PCH), and a complex programmable logic device (complex programmable logic device, CPLD). The out-of-band controller connects to the CPLD, which in turn connects to the PCH. The applications of the PCH and the CPLD will be explained in subsequent embodiments, and will not be detailed here.

As shown in FIG. 2, a system for configuring the BIOS configuration item is provided in the embodiments of the present application. The system includes a terminal device and a server (see FIG. 1). The terminal device and the server are connected by a network or a communication bus. The terminal device is used to generate the content to be configured for the target configuration item in the BIOS configuration item, and to send the content to be configured to the server. The server is used to receive the content to be configured for the target configuration item, and to configure the target configuration item to the content to be configured.

In some embodiments, the terminal device may also be referred to as terminal, user equipment (user equipment, UE), access terminal, subscriber unit, subscriber station, mobile station, remote station, remote terminal, mobile device, user terminal, wireless communication device, user agent, user apparatus, or others. A terminal device may be a mobile phone, an augmented reality (augmented reality, AR) device, a virtual reality (virtual reality, VR) device, a tablet, a laptop, an ultra-mobile personal computer (ultra-mobile personal computer, UMPC), a netbook, a personal digital assistant (personal digital assistant, PDA), or others.

The following is a brief introduction to terms involved in the present application.
system management interrupt (system management interrupt, SMI): the highest-priority interrupt in the server, which cannot be masked. After a system management interrupt is triggered, the CPU enters a system management mode (system management mode, SMM) and executes an interrupt handler indicated by the system management interrupt.

The system management interrupt is divided into a software interrupt and a hardware interrupt. The software interrupt is generated by using program settings, and the hardware interrupt is generated by using external hardware.

System Management Mode: a CPU execution mode in an Intel x86 architecture. Currently, the System Management Mode may be entered only by the system management interrupt. In the System Management Mode, all other operations by the CPU are masked. At this time, the OS is in a "frozen" state, unable to process any other interrupts.

Intelligent Platform Management Interface (intelligent platform management interface, IPMI): an industry standard used for managing peripheral devices in enterprise systems based on Intel architecture. Users may use the IPMI to monitor physical health attributes of the server, such as temperature, voltage, fan status, power supply status, and others. The IPMI may work across different OSs, firmware, and hardware platforms, allowing for intelligent monitoring, control, and automatic reporting of operating status of numerous servers, thereby reducing server system costs.

While working, all IPMI functions are accomplished by sending an IPMI command to the BMC. The IPMI command uses an instruction specified in an IPMI specification. The BMC receives the command and records an event message in a system event log, and maintains a sensor data record that describes status of sensors in the system.

Redfish: an open industry standard specification published by Distributed Management Task Force (distributed management task force, DMTF), providing simple and secure management capabilities for scalable platform hardware. It is a management standard based on the Hypertext Transfer Protocol Secure (hypertext transfer protocol secure, HTTPS) service, which utilizes Representational State Transfer (representational state transfer full, RESTful) interfaces to achieve device management. Each HTTPS operation submits or returns a resource or a consequence in JavaScript Object Notation (JavaScript object notation, JSON) format, encoded in Unicode Transformation Format (unicode transformation format, UTF)-8, short for UTF-8, similar to how World Wide Web (world wide web, Web) applications return Hypertext Markup Language (hyper text markup language, HTML) to browsers.

It should be noted that the system architecture and application scenarios described in the embodiments of the present application are intended to illustrate the technical solutions of the embodiments of the present application more clearly, and do not constitute a limitation on the technical solution provided by the embodiments of the present application. A person of ordinary skills in the art may understand that as the system architecture evolves and new service scenarios emerge, the technical solutions provided by the embodiments of the present application are equally applicable to similar technical issues.

For ease of understanding, an illustrative introduction to the method for configuring the Basic Input Output System configuration item provided by the present application is provided below in conjunction with the accompanying drawings. This method is applicable to the system architecture shown in FIG. 1 and FIG. 2.

The following embodiments of the present application are divided into three parts, introducing methods for configuring the Basic Input Output System configuration item.

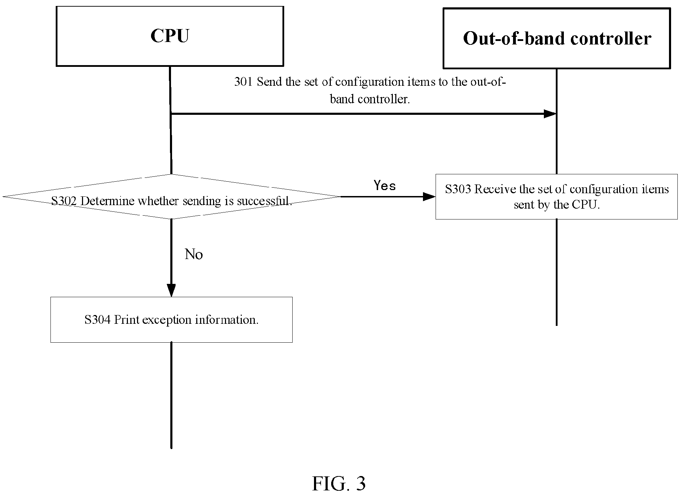

The first part, with FIG. 3, describes the process by which the CPU reports the BIOS configuration item that supports online modification to the out-of-band controller.

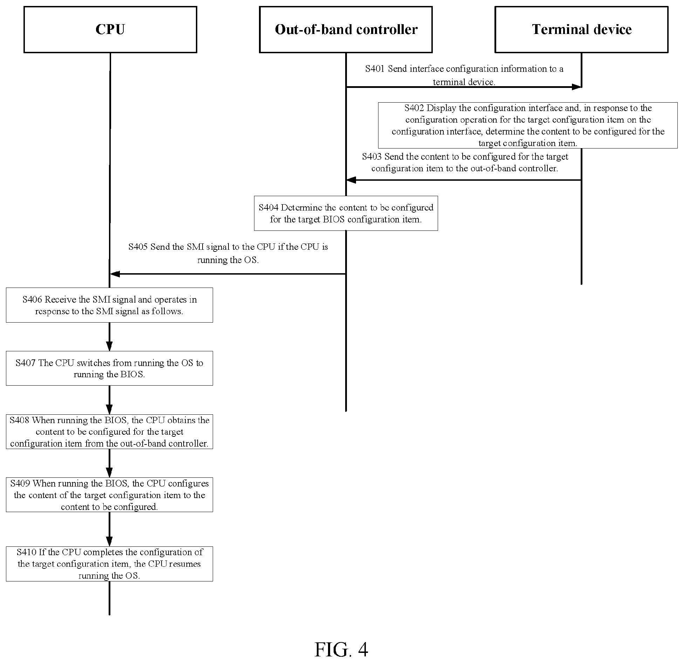

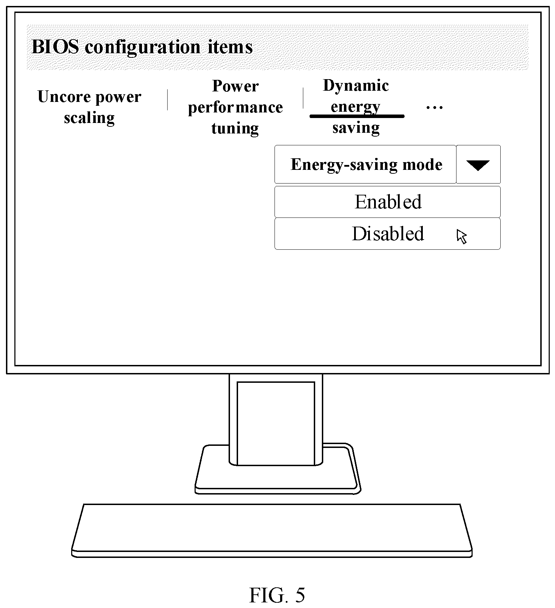

The second part, with FIG. 4 and FIG. 5, describes a process by which an out-of-band controller configures the configuration item that supports online modification in the first part.

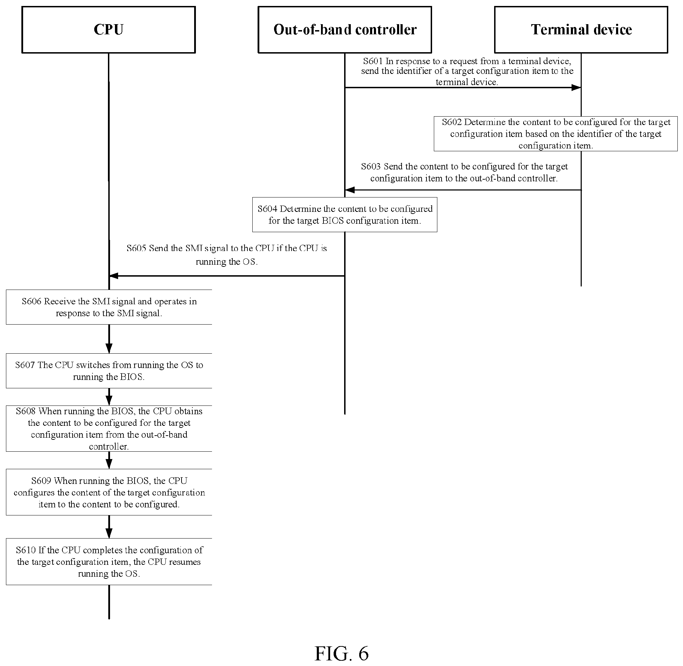

The third part, with FIG. 6, describes the process by which another out-of-band controller configures the configuration item that supports online modification in the first part.

FIG. 3 is a flowchart of a method for configuring the configuration item of the Basic Input Output System according to an example embodiment. By way of example, the method includes the following steps S301 to S304.

It should be noted that when the CPU performs a step in steps S301 to S304, such as S301, S302, and S304, it may be considered as the CPU invoking the BIOS to execute the step.

S301: The CPU sends a set of configuration items to the out-of-band controller.

The set of configuration items is a collection of configuration items that support online modification in the current BIOS version. The set of configuration items includes a plurality of configuration items that support online modification, which contain the target configuration item. For example, the set of configuration items may include a plurality of configuration item identifiers which are used to indicate the plurality of configuration items that support online modification. The configuration item identifiers correspond one-to-one with the configuration items, that is, an identifier indicates a configuration item.

After the BIOS performs a modification operation for the configuration item that supports online modification, the modified configuration content of the configuration item that supports online modification may take effect without the system restart. "online" refers to the OS being online, and "take effect" means that the server may operate based on the modified configuration content. For example, the configuration items that support online modification include the energy saving mode. After the energy saving mode is modified from **enabled** to **disabled,** the server may operate in a high-performance mode without the system restart.

In other words, after the configuration content of a configuration item that supports online modification is changed, for example, after configuration content 1 of a configuration item *a* that supports online modification (hereinafter referred to as the configuration item *a*) is changed to configuration content 2, the content 2 configured of the configuration item *a* takes effect immediately without the system restart, and the server may operate based on the content 2 configured of the configuration item *a*.

In some embodiments, the configuration content of the configuration items that support online modification is stored in registers. One configuration item that supports online modification corresponds to one register. The configuration items that support online modification correspond one-to-one with the registers, that is, one register stores only data of the configuration content of one configuration item that supports online modification. For example, a register corresponding to the target configuration item is the target register, and the target register stores only the numerical value corresponding to the configuration content of the target configuration item.

By way of example, the plurality of configuration items include the configuration item a, which may be any one of the plurality of configuration items. The following uses the configuration item *a* as an example to explain the features of configuration items that support online modification.

In some embodiments, a numerical value *a* corresponding to the original configuration content of the configuration item *a* is stored in a register *a*. The configuration content of the configuration item *a* may be modified by modification of the numerical value in the register *a*. Based on this, the original configuration content of the configuration item *a* may be modified to the new configuration content by modification of the original numerical value *a* in the register *a* to a numerical value b corresponding to the new configuration content. After the content in the register *a* is modified to the numerical value *b,* the server may run based on the new configuration content corresponding to the numerical value *b* of the register *a* without the system restart.

Optionally, the set of configuration items includes dynamic energy saving, uncore power scaling, hardware prefetching, Data Cache Unit (DCU) prefetching, level 3 (L3) cache prefetching, power performance tuning, power efficiency preference mode, and others.

The configurable content for dynamic energy saving includes enabling and disabling the energy saving mode. When energy saving mode is enabled, a plurality of different power-saving levels are configurable, such as level 0, level 1, level 2, ..., level *M.*

The configurable content for uncore power scaling includes enabling and disabling it. When enabled, the plurality of percentages are configurable, such as 10%, 30%, 60%.

The configurable content for hardware prefetching includes enabling and disabling it, the configurable content for data caching unit prefetching includes enabling and disabling it, and the configurable content for L3 cache prefetching includes enabling and disabling it.

For power performance tuning, the BIOS and the OS are configurable. When the BIOS is selected, the BIOS controls the selection of the power performance tuning policy. When the OS is selected, the OS controls the selection of the power performance tuning policy.

For the power efficiency preference mode, the balanced performance mode, performance-priority mode, balanced power mode, and energy saving mode are configurable. The power efficiency preference mode is a power performance policy, indicating that when the OS is configured for power performance tuning, the OS controls the configuration of the power efficiency preference mode.

Optionally, the BIOS program is pre-configured with the plurality of configuration items that support online modification. The BIOS running on the CPU may determine a set of configuration items to send to the out-of-band controller based on the plurality of configuration items that support online modification in the program.

It should be noted that the content of the set of configuration items for different versions of the BIOS may be different or the same, which is not limited in the embodiments of the present application.

In some embodiments, during the BIOS boot process after the server is powered on, the BIOS running on the CPU actively sends the set of configuration items that support online modification in the current BIOS version to the out-of-band controller. For example, the BIOS may send the set of configuration items that support online modification in the current BIOS version during the Driver Execution Environment (DXE) stage.

In some other embodiments, after the OS is started, the out-of-band controller triggers the target system management interrupt signal which instructs the CPU to switch from running the OS to running the BIOS and send the set of configuration items that support online modification in the current BIOS version to the out-of-band controller.

For example, after receiving the target system management interrupt signal, the CPU enters the SMM, instruct the CPU to switch from running the OS to running the BIOS. Then, the BIOS running on the CPU sends the set of configuration items that support online modification to the out-of-band controller. After the BIOS running on the CPU sends the set of configuration items that support online modification to the out-of-band, the CPU exits the SMM and resumes running the OS.

In an example, the BIOS running on the CPU generates a JSON file 1 based on the configuration items that support online modification, and the JSON file 1 includes the identifiers of each configuration item in the set of configuration items, that is, the identifiers of the configuration items that support online modification. The BIOS running on the CPU sends an IPMI command 1 that carries the JSON file 1 to the out-of-band controller. This enables the set of configuration items that support online modification to be sent to the out-of-band controller.

In another example, the BIOS running on the CPU sends an IPMI command 2 that carries information about the set of configuration items to the out-of-band controller. This enables the set of configuration items that support online modification to be sent to the out-of-band controller.

In some embodiments, the BIOS running on the CPU also sends BIOS configuration items, configurable content of the BIOS configuration items, and current configuration content of the BIOS configuration items to the out-of-band controller.

It should be noted that details of this part will be explained in subsequent embodiments and will not be detailed here.

S302: The CPU determines whether sending is successful.

When the result is yes, proceed to S303. When the result is no, proceed to S304.

In some embodiments, after the BIOS running on the CPU sends the set of configuration items to the out-of-band controller, when no response is received from the out-of-band controller within a preset duration, the sending is considered failed. However, when a response is received from the out-of-band controller within the preset duration, the sending is considered successful. The preset duration may be 0.5 seconds, 1 second, 1.5 seconds, and so on. It should be noted that the value of the preset duration is not restricted in the embodiments of the present application.

In some other embodiments, after the BIOS running on the CPU sends the set of configuration items to the out-of-band controller, when no response is received from the out-of-band controller within a preset duration, the BIOS sends the set of configuration items to the out-of-band controller again. After sending *N* times, when no response is received from the out-of-band controller within a preset duration, the sending is considered failed. *N* is a positive integer greater than 1. Setting the sending result to be determined as successful or failed after *N* attempts rather than after a single attempt helps increase the probability of successful transmission.

It should be noted that the value of *N* is not restricted in the embodiments of the present application. For example, *N* may be 5, 6, and so on.

S303: The out-of-band controller receives the set of configuration items sent by the CPU.

In some embodiments, the out-of-band controller, upon receiving the IPMI command 1, determines the configuration item that supports online modification in the BIOS configuration item by parsing the JSON file 1.

In some other embodiments, the out-of-band controller, upon receiving the IPMI command 2, determines the configuration item that supports online modification in the BIOS configuration item by parsing the IPMI command 2.

In some embodiments, after receiving the set of configuration items, the out-of-band controller stores the set in a local cache. This allows for modification to the configuration item that supports online modification in the BIOS configuration item when the server runs the OS subsequently. Optionally, the set of configuration items also includes the BIOS version number.

In some embodiments, after receiving the set of configuration items, the out-of-band controller compares the BIOS version number included in the set of configuration items with the BIOS version number included in the historical set of configuration items stored in the out-of-band controller to determine whether the BIOS version has changed. When the BIOS version has changed, the out-of-band controller stores the newly received set of configuration items which is used to determine the target configuration item in the following embodiments. When the BIOS version has not changed, the out-of-band controller may or may not store the newly received set of configuration items.

S304: The CPU prints exception information.

In some embodiments, when the BIOS running on the CPU fails to send the set of configuration items to the out-of-band controller, the BIOS running on the CPU prints the exception information to record the failure of sending the set of configuration items to the out-of-band controller. After printing the exception information, the BIOS continues to run.

In the previous embodiments, the BIOS running on the CPU sends the set of configuration items to the out-of-band controller. One the one hand, this allows the out-of-band controller to determine which BIOS configuration items support online modification based on the set of configuration items. On the other hand, since the set of configuration items is the collection of items that support online modification in the current BIOS version, this helps in ensuring that the determined target configuration item matches the current BIOS version.

FIG. 4 is a flowchart of a method for configuring a configuration item of a Basic Input Output System according to an example embodiment. By way of example, the method includes the following steps S401 to S410.

S401: An out-of-band controller sends interface configuration information to a terminal device.

The interface configuration information is configured to display the configuration interface by the terminal, and the configuration interface includes a target configuration item. The target configuration item is a configuration item that supports online modification in a BIOS configuration item.

Optionally, the target configuration item may include one or more configuration items from a set of configuration items.

The target configuration item may include some or all of the configuration items in the set of configuration items, which is not limited in the embodiments of the present application.

In some embodiments, during the BIOS boot process after the server is powered on, the BIOS running on the CPU sends the set of configuration items to the out-of-band controller, and the out-of-band controller generates the interface configuration information based on the identifier of the target configuration item in the set of configuration items.

In some other embodiments, after the server's OS starts to run, the out-of-band controller generates the interface configuration information based on the identifier of the target configuration item in the set of configuration items stored in the local cache. In some embodiments, the out-of-band controller generates first interface configuration information, and the first interface configuration information corresponds to a first configuration interface that may display some of the configuration items in the set of configuration items. These configuration items are configuration items determined by the out-of-band controller as requiring modification currently. For example, they may be determined based on the current operating scenario of the server or services on the server, which is not limited in the embodiments of the present application.

In some other embodiments, the out-of-band controller generates second interface configuration information, which corresponds to a second configuration interface that may display all configuration items in the set of configuration items.

It should be noted that the out-of-band controller may send the interface configuration information to the terminal device when the CPU runs the BIOS or when the CPU runs the OS, which is not limited in the embodiments of the present application.

S402: The terminal device displays the configuration interface and, in response to the configuration operation for the target configuration item on the configuration interface, determines the content to be configured for the target configuration item.

Optionally, the configuration interface includes a web interface. Configuring the interface to include a web interface allows the configuration interface to be displayed in a browser. This simplifies the display process of the configuration interface compared to using a dedicated application to display the configuration interface.

In some embodiments, FIG. 5 is a schematic diagram of the configuration interface. When a user performs configuration operations on the target configuration item (such as the dynamic energy saving configuration item) on the configuration interface, for example, configuring the content of the target configuration item as disabling the energy saving mode (the content to be configured), the terminal device determines the content to be configured for the target configuration item in response to the configuration operation.

Understandably, the content to be configured may be a disabling or an enabling state option or a numerical value. For example, when the target configuration item is uncore power scaling and the uncore power scaling is enabled, the content to be configured also includes a specific scaling percentage, such as 30%. Therefore, the embodiments of the present application do not limit the form of the content to be configured.

It should be noted that a user may be allowed to configure the target configuration item when the CPU runs the BIOS or running the OS. The embodiments of the present application do not limit the timing of the terminal device modifying the target configuration item.

S403: The terminal device sends the content to be configured for the target configuration item to the out-of-band controller.

In some embodiments, after the terminal device determines the content to be configured for the target configuration item, the terminal device sends the content to be configured for the target configuration item to the out-of-band controller. For example, the terminal device may generate a JSON file 2 that records the content to be configured for the target configuration item. The terminal device sends the JSON file 2 to the out-of-band controller, thereby delivering the content to be configured for the target configuration item to the out-of-band controller.

S404: The out-of-band controller determines the content to be configured for the target configuration item in the BIOS configuration item.

In some embodiments, after receiving the content to be configured for the target configuration item sent by the terminal device, the out-of-band controller performs S404, that is, determining the content to be configured for the target configuration item. For example, the out-of-band controller receives the JSON file 2 and acquires the content to be configured by parsing the file.

In some other embodiments, after the out-of-band controller receives the content to be configured sent by the terminal device, when the CPU runs the OS, the out-of-band controller performs S404, that is, determining the content to be configured for the target configuration item in the BIOS configuration item.

In some embodiments, the out-of-band controller determines the content to be configured for the target configuration item in the BIOS configuration item and generates a JSON file 3 based on the content to be configured. The JSON file 3 includes the target configuration item and the content to be configured for the target configuration item.

In some embodiments, the out-of-band controller pre-stores configurable content of the target configuration item. After receiving the content to be configured for the target configuration item, the out-of-band controller determines whether the content to be configured is configurable. When the result is yes, the out-of-band controller performs S405. Otherwise, the procedure ends.

In some other embodiments, the out-of-band controller pre-stores the current configuration content of the target configuration item. After receiving the content to be configured for the target configuration item, the out-of-band controller determines whether the content to be configured is the same as the current configuration content. When the result is yes, the procedure ends. When the result is no, the out-of-band controller performs S405.

It should be noted that the configurable content and the current configuration content of the target configuration item are sent by the BIOS to the out-of-band controller and stored by the out-of-band controller in the local cache.

S405: When the CPU runs the OS, the out-of-band controller sends a system management interrupt signal to the CPU.

The system management interrupt signal is used to instruct the CPU to perform target operations. The target operations include the following steps S407 to S410.

In some embodiments, when the out-of-band controller performs S404 without determining whether the CPU runs the OS, the out-of-band controller sends the system management interrupt signal to the CPU after determining that the CPU runs the OS. For example, the BIOS sends an IPMI command 3 to the out-of-band controller, which includes notification information that is configured to instruct the CPU to run the OS. Upon receiving the notification information sent by the BIOS, the out-of-band controller determines that the CPU runs the OS. Then, the out-of-band controller sends the system management interrupt signal to the CPU.

In other embodiments, when the out-of-band controller performs S404 after determining that the CPU runs the OS, the out-of-band controller sends the system management interrupt signal to the CPU upon determining the content to be configured for the target configuration item.

The following is an example introduction to the process of the out-of-band controller sending the system management interrupt signal to the CPU.

The out-of-band controller triggers the system management interrupt signal by changing a general-purpose input/output (general-purpose input/output, GPIO) state to low. For example, the out-of-band controller is configured with a register *b*. The out-of-band controller writes the value *c* to the register, and the value *c* is used as a directive for changing the GPIO state to low. After detecting that the value *c* is written to the register *b*, a CPLD performs the operation of changing the GPIO state to low corresponding to the value *c*. After detecting that the GPIO state is changed to low, a PCH determines the identifier of the GPIO whose state is changed to low, and sends the system management interrupt signal with the target identifier to the CPU based on the identifier.

It should be noted that the out-of-band controller may also perform S405 by way of sending the system management interrupt signal to the CPU as achieved in the related technology, which is not limited in the embodiments of the present application.

S406: The CPU receives the system management interrupt signal and operates in response to the system management interrupt signal as follows.

In some embodiments, different system management interrupt signals have different identifiers, and each of the identifiers indicates a system management interrupt handler. A system management interrupt program instructs the CPU on operations required to be performed after entering the System Management Mode. In the embodiments of the present application, the target identifier of the system management interrupt signal corresponds to the target system management interrupt handler, which instructs operations from S408 to S410.

S407: The CPU switches from running the OS to running the BIOS.

Optionally, the system management interrupt signal is also used to instruct the CPU to enter the System Management Mode.

In some embodiments, after receiving the system management interrupt signal, the CPU suspends the running of the OS, writes the CPU context of the current program to the system management random access memory, and switches to the System Management Mode. In the System Management Mode, the CPU runs the BIOS.

S408: When running the BIOS, the CPU acquires the content to be configured for the target configuration item from the out-of-band controller.

In some embodiments, the BIOS running on the CPU sends an IPMI command 4 to the out-of-band controller, which is used to instruct the acquiring of the content to be configured for the target configuration item. The out-of-band controller, upon receiving the IPMI command 4, returns an IPMI command 5 that carries the JSON file 3 to the BIOS running on the CPU. As previously mentioned, the JSON file 3 contains the target configuration item and the content to be configured for the target configuration item.

In some other embodiments, after receiving the IPMI command 4, the out-of-band controller returns an IPMI command 6 to the BIOS running on the CPU. The IPMI command 6 carries the target configuration item and the content to be configured for the target configuration item.

In some embodiments, after acquiring the content to be configured for the target configuration item, the BIOS running on the CPU determines whether the target configuration item supports online modification. When the result is yes, S409 is performed. When the result is no, the procedure ends.

S409: When running the BIOS, the CPU configures the content of the target configuration item to the content to be configured.

In some embodiments, when the configuration content of the target configuration item is stored in the register, the BIOS running on the CPU writes the numerical value corresponding to the content to be configured into the target register corresponding to the target configuration item, thereby achieving the configuration of the content of the target configuration item to the content to be configured.

It should be noted that after the numerical value corresponding to the content to be configured is written to the target register, the configuration content of the target configuration item takes effect. Thereafter, the server operates based on the mode indicated by the content to be configured for the target configuration item.

In some other embodiments, when the configuration content of the target configuration is stored in a static file, the BIOS running on the CPU writes the content to be configured into the static file, thereby achieving the configuration of the content of the target configuration item to the content to be configured.

It should be noted that once the content to be configured is written to the static file, the configuration content of the target configuration item takes effect. Then, the server operates based on the mode indicated by the content to be configured for the target configuration item.

S410: When the CPU completes the configuration of the target configuration item, the CPU resumes running the OS.

Completing the configuration of the target configuration item refers to configuring the content of the target configuration item to the content to be configured.

In some embodiments, after the BIOS running on the CPU completes the configuration of the target configuration item, the CPU exits the System Management Mode and reads the CPU context from the system management random access memory written before entering the System Management Mode. The CPU then restores the operating mode prior to entering the System Management Mode based on the CPU context, thereby resuming the operation of the OS.

Optionally, the method may further include the following steps S411 to S412.

S411: When running the BIOS, the CPU sends the configuration result of the target configuration item to the out-of-band controller.

The configuration result is used to indicate whether the configuration of the target configuration item succeeds or fails.

In some embodiments, after S409 is performed, the BIOS running on the CPU sends the configuration result of the target configuration item to the out-of-band controller.

S412: The out-of-band controller receives the configuration result of the target configuration item sent by the CPU.

In some embodiments, when the configuration result of the target configuration item received by the out-of-band controller indicates that the configuration is successful, a target file (JSON file 4) is generated, which contains the target configuration item and the content to be configured. The target file is used to record the modified target configuration item in the configuration items that support online modification, as well as the content currently configured for the target configuration item.

Throughout the server's operation, when the out-of-band controller makes a plurality of modifications to the target configuration item, in some embodiments, the out-of-band controller only retains the most recently generated target file. In some other embodiments, the out-of-band controller retains the target file generated after each modification of the target configuration item. Therefore, when the BIOS running on the CPU requests the content configured for the target configuration item, the out-of-band controller returns the content currently configured for the target configuration item to the BIOS based on the most recently generated target file.

Optionally, the server also includes a BIOS chip that stores the configuration content of the BIOS configuration item.

The method may further include the following steps S413 to S416.

S413: During the BIOS boot process, the CPU sends an acquisition request to the out-of-band controller.

The request is used to acquire the content configured for the target configuration item.

In some embodiments, during the BIOS boot process after the server is powered on, a request is sent to the out-of-band controller, such as an IPMI command 7, for requesting the content to be configured for the target configuration item. For example, the BIOS running on the CPU sends the acquisition request to the out-of-band controller during the Driver Execution Environment (driver execution environment, DXE) stage.

S414: When the configuration result indicates that the configuration of the target configuration item succeeds, the out-of-band controller sends the content to be configured for the target configuration item to the CPU.

The content to be configured is used by the BIOS running on the CPU to modify the configuration content of the target configuration item in the BIOS chip to the content to be configured.

In some embodiments, after receiving the request from the BIOS running on the CPU, the out-of-band controller determines whether the configuration of the target configuration item succeeds. When the item is successfully configured, the out-of-band controller sends the content to be configured for the target configuration item to the BIOS.

S415: The CPU receives the content to be configured returned by the out-of-band controller.

In some embodiments, the BIOS running on the CPU receives an IPMI command 8 returned by the out-of-band controller, which carries the target configuration item and the content currently configured for the target configuration item (the content to be configured). The BIOS running on the CPU acquires the target configuration item and the content currently configured for the target configuration item (the content to be configured) by parsing the IPMI command 8.

In some other embodiments, the BIOS running on the CPU receives an IPMI command 9 returned by the out-of-band controller, and the IPMI command 8 carries the target file. As previously mentioned, the target file contains the target configuration item and the content currently configured for the target configuration item. The BIOS running on the CPU acquires the target configuration item and the content currently configured for the target configuration item by parsing the target file.

S416: The CPU modifies the configuration content of the target configuration item in the BIOS chip to the content to be configured.

In some embodiments, after the BIOS running on the CPU modifies the configuration content of the target configuration item in the BIOS chip to the content to be configured, the server is configured based on the content configured for the target configuration item. For example, during the Driver Execution Environment (driver execution environment, DXE) stage, the BIOS running on the CPU modifies the configuration content of the target configuration item in the BIOS chip to the content to be configured.

The above constitutes the first part of the implementations of the present application. The following provides an example introduction to the second part of the embodiments of the present application with FIG. 6.

FIG. 6 is a flowchart of a method for configuring a configuration item of a Basic Input Output System according to an example embodiment. By way of example, the method includes the following steps S601 to S610.

S601: In response to a request from a terminal device, an out-of-band controller sends the identifier of a target configuration item to the terminal device.

In some implementations, the terminal device sends a request to the out-of-band controller to acquire the configuration item that supports online modification in a BIOS configuration item. After receiving the request, the out-of-band controller returns the identifier of the target configuration item to the terminal device.

For example, the out-of-band controller may return a JSON file 1 to the terminal device. As previously mentioned, the JSON file 1 contains the identifier of the target configuration item.

S602: The terminal device determines the content to be configured for the target configuration item based on the identifier of the target configuration item.

In some embodiments, the terminal device acquires the content to be configured for the target configuration item based on the identifier of the target configuration item.

For example, the user enters the content to be configured for the target configuration item corresponding to the identifier by a Redfish interface to the terminal device, which then receives the content to be configured and generates a JSON file 5. The JSON file 5 records the identifier of the target configuration item and the content to be configured the item.

S603: The terminal device sends the content to be configured for the target configuration item to the out-of-band controller.

In some embodiments, after determining the content to be configured, the terminal device sends the content to be configured for the target configuration item to the out-of-band controller to instruct the out-of-band controller to configure the target configuration item based on the content.

For example, the terminal device sends the JSON file 5 to the out-of-band controller to send the content to be configured for the target configuration item to the out-of-band controller.

In some other embodiments, the terminal device may also send the content to be configured for target configuration items to a plurality of out-of-band controllers of a plurality of servers. After receiving the content to be configured, the plurality of out-of-band controllers perform steps S604 to S610 respectively. In the embodiments, the terminal device may simultaneously modify the BIOS configuration items of the plurality of servers by issuing the content to be configured for the target configuration items to the out-of-band controllers of the plurality of servers, thereby improving the efficiency of modification.

It should be noted that the BIOS of the plurality of servers supports online modification of the target configuration items.

S604-S610: Refer to S404 to S410.

It should be noted that the second part of the embodiments of the present application may also include S411 to S416 of the first part of the embodiments of the present application, which will not be detailed here.

The above mainly introduces the solutions provided by the embodiments of the present application from the perspective of methodology. To achieve the previous functions, the apparatus for configuring the BIOS configuration item includes hardware structures and/or software modules that perform each function. It should be readily apparent to those skilled in the art that the units and algorithm steps of the various examples described with the embodiments disclosed herein may be implemented in hardware, or a combination of hardware and computer software. Whether a particular function is carried out by hardware or by software driving the hardware depends on the specific application of the technical solutions and design constraints. Professional technical personnel may use different methods for each specific application to implement the described functions, but such an implementation should not be considered beyond the scope of the present application.

In the embodiments of the present application, functional modules of the apparatus for configuring the BIOS configuration item may be divided according to the previous methods. For example, the apparatus for configuring the BIOS configuration item may include various functional modules corresponding to divided functions, or two or more functions may be integrated in one processing module. The integrated modules mentioned previously may be implemented either in the form of hardware or as software functional modules. It should be noted that the division of modules in the embodiments of the present application is illustrative and represents only one way of logical function division. Other division methods may be used in actual implementation.

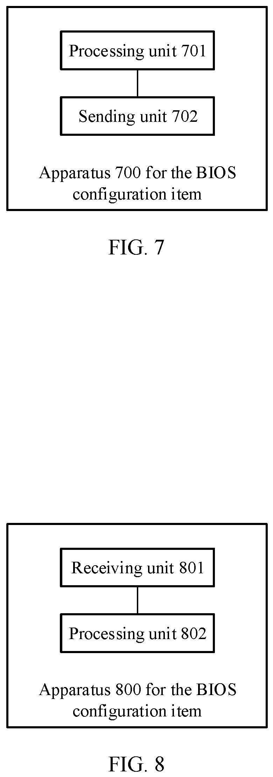

By way of example, FIG. 7 is a possible schematic diagram of a structure of the apparatus for configuring the BIOS configuration item involved in the previous embodiments (referred to as the configuration apparatus 700 for the BIOS configuration item). The apparatus 700 for the BIOS configuration item includes a processing unit 701 and a sending unit 702. The processing unit 701 is used to determine the content to be configured for the target configuration item, where the target configuration item is a configuration item that supports online modification in the BIOS configuration item, as in S404 shown in FIG. 4 and S604 shown in FIG. 6. The sending unit 702 is used to send a system management interrupt signal to the CPU when the CPU runs the OS. The system management interrupt signal is used to instruct the CPU to switch from running the OS to running the BIOS, acquire and configure the content to be configured for the target configuration item when the CPU runs the BIOS, and resume running the OS when the configuration of the target configuration item is completed, as in S405 shown in FIG. 4 and S605 shown in FIG. 6.

Optionally, the processing unit 701 is configured to: send interface configuration information to the terminal device, where the information is used by the terminal device to display a configuration interface that includes the target configuration item, and receive the content to be configured for the target configuration item sent by the terminal device, where the content to be configured is determined by the terminal device in response to the configuration operation for the target configuration item on the configuration interface.

Optionally, the processing unit 701 is also configured to: send the identifier of the target configuration item in response to the request from the terminal device, and receive the content to be configured for the target configuration item sent by the terminal device, where the content to be configured is determined by the terminal device based on the identifier of the target configuration item.

Optionally, the processing unit 701 is also configured to receive the set of configuration items sent by the CPU. The set of configuration items is a collection of configuration items that support online modification in the current BIOS version, and the set of configuration items includes the target configuration item and is sent during the BIOS boot process.

Optionally, the processing unit 701 is also configured to receive the configuration result of the target configuration item returned by the CPU. The configuration result is used to indicate whether the configuration of the target configuration item succeeds or fails, and the configuration result is sent when the CPU runs the BIOS.

Optionally, the server also includes the BIOS chip that stores the configuration of the BIOS configuration item. Optionally, the processing unit 701 is also configured to: receive an acquisition request sent by the CPU, where the acquisition request is configured to request the content configured for the target configuration item, and send the content to be configured to the CPU when the configuration result indicates that the configuration succeeds. The content to be configured is used to modify the configuration content of the target configuration item in the BIOS chip to the content to be configured.

For detailed description of the previous optional methods, refer to the implementations for the methods, which will not be detailed here. In addition, the explanation and beneficial effects of the configuration apparatus 700 for any of the previously mentioned BIOS configuration items may be referred to in the corresponding embodiments for the methods, and will not be detailed here.

By way of example, FIG. 8 is a possible schematic diagram of a structure of the apparatus for configuring the BIOS configuration item involved in the previous embodiments (referred to as the configuration apparatus 800 for the BIOS configuration item). The apparatus 800 includes a receiving unit 801 and a processing unit 802. The receiving unit 801 is used to receive the system management interrupt signal when the CPU runs the OS, as in S406 shown in FIG. 4 and S606 shown in FIG. 6. The processing unit 802 is used to perform the following operations based on the system management interrupt signal: controlling the CPU to switch from running the OS to running the BIOS, when the CPU runs the BIOS, controlling the CPU to acquire the content to be configured for the target configuration item from the out-of-band controller and configuring the content of the target configuration item to the content to be configured, where the target configuration item is a configuration item that supports online modification in the BIOS configuration item, and controlling the CPU to resume running the OS when the CPU completes the configuration of the target configuration item, as in S407 to S410 shown in FIG. 4 and S607 to S610 shown in FIG. 6.

Optionally, during the boot process of the BIOS, the processing unit 802 is also used to control the CPU to send the set of configuration items to the out-of-band controller. The set of configuration items is a collection of configuration items that support online modification in the current BIOS version, and the set of configuration items includes the target configuration item.

Optionally, when the CPU runs the BIOS, the processing unit 802 is also used to control the CPU to send the configuration result of the target configuration item to the out-of-band controller. The configuration result is used to indicate whether the configuration of the target configuration item succeeds or fails.

Optionally, the server also includes a BIOS chip that stores BIOS configuration items. During the BIOS boot process, the processing unit 802 is further used to: control the CPU to send an acquisition request to the out-of-band controller, where the acquisition request is configured to request the content configured for the target configuration item, to receive the content to be configured returned by the out-of-band controller, and to modify the configuration content of the target configuration item in the BIOS chip to the content to be configured.

For detailed description of the previous optional methods, refer to the implementations for the methods, which will not be detailed here. In addition, the explanation and beneficial effects of the configuration apparatus 800 for any of the previously mentioned BIOS configuration items may be referred to in the corresponding embodiments for the methods, and will not be detailed here.

The embodiments of the present application also provide a computer device, which includes a processor and a memory which are connected. The memory stores a computer-executable instruction, and the processor executes the instruction, implementing the data processing methods described in the previous embodiments. The embodiments of the present application do not limit the specific form of the computer device. For example, the computer device may be a terminal apparatus or a network device. The terminal apparatus may be referred to as terminal, user equipment (user equipment, UE), access terminal, subscriber unit, subscriber station, mobile station, remote station, remote terminal, mobile device, user terminal, wireless communication device, user agent, user apparatus, or others. The terminal apparatus may be a mobile phone, an augmented reality (augmented reality, AR) device, a virtual reality (virtual reality, VR) device, a tablet, a laptop, an ultra-mobile personal computer (ultra-mobile personal computer, UMPC), a netbook, a personal digital assistant (personal digital assistant, PDA), or others. The network device may be a server or others. The server may be a physical server, a logical server, or two or more physical or logical servers that share different responsibilities and work with each other to implement various server functions.

The embodiments of the present application also provide a computer-readable storage medium that stores a computer program. When running on a computer, the computer program enables the computer to implement a method implemented by any of the computer devices provided previously.

The explanation and beneficial effects of any computer-readable storage medium provided previously may be referred to in the corresponding embodiments, and will not be detailed here.

The embodiments of the present application also provide a chip. The chip integrates a control circuit and one or more ports for implementing the functions of the computer device. Optionally, the features supported by the chip may be referred to in previous description, and will not be detailed here. A person of ordinary skill in the art will understand that all or part of the steps in the previous embodiments may be implemented by a program instructing hardware. The program may be stored in a computer-readable storage medium. The storage medium may be a read-only memory (ROM) module, a random access memory (RAM) module, and others. The processing unit or processor may be a CPU, a general-purpose processor, an application specific integrated circuit (application specific integrated circuit, ASIC), a digital signal processor (digital signal processor, DSP), a field programmable gate array (field programmable gate array, FPGA), or other programmable logic devices, transistor logic devices, hardware components, or any combination of them.

The embodiments of the present application also provide a computer program product comprising an instruction. When running on a computer, the instruction enables the computer to perform any one of the methods in the previous embodiments. The computer program product includes one or more computer instructions. When the computer program instruction is loaded and executed on a computer, the processes or functions of the embodiments of the present application are generated in whole or in part. The computer may be a general-purpose computer, a special purpose computer, a computer network, or a programmable device. The computer instruction may be stored in the computer-readable storage medium or transmitted from one computer-readable storage medium to another. For example, the computer instruction may be transmitted from a website, computer, server, or data center to another website, computer, server, or data center through a line such as a coaxial line, an optical fiber, or a digital subscriber line (a digital subscriber line, DSL), or through wireless technologies such as infrared technology, radio technology, microwave technology, and the like. The computer-readable storage medium may be any available medium that may be accessed by a computer or any data storage device that is integrated with one or more available media, including but not limited to a server and a data center. The available medium may be a magnetic medium such as a floppy drive, a drive, or a tape, an optical medium such as a digital video disc (DVD), or a semiconductor medium such as a solid-state drive (SSD).

It should be noted that the devices provided in the embodiments of the present application for storing the computer instruction or the computer program, including, but not limited to, the memory, the computer-readable storage medium, the communication chip, and so on, are all non-transitory (non-transitory).

The previous embodiments may be implemented wholly or partly by software, hardware, firmware, or any combination of them. When implemented using a software program, the embodiments may be realized wholly or partly in the form of a computer program product. The computer program product includes one or more computer instructions. When the computer program instruction is loaded and executed on a computer, the processes or functions of the embodiments of the present application are generated in whole or in part. The computer may be a general-purpose computer, a special purpose computer, a computer network, or a programmable device. The computer instruction may be stored in the computer-readable storage medium or transmitted from one computer-readable storage medium to another. For example, the computer instruction may be transmitted from a website, computer, server, or data center to another website, computer, server, or data center through a line such as a coaxial line, an optical fiber, or a digital subscriber line (a digital subscriber line, DSL), or through wireless technologies such as infrared technology, radio technology, microwave technology, and the like. The computer-readable storage medium may be any available medium that may be accessed by a computer or any data storage device that is integrated with one or more available media, including but not limited to a server and a data center. The available medium may be a magnetic medium such as a floppy drive, a drive, or a tape, an optical medium such as a DVD, or a semiconductor medium such as a solid-state drive (solid state disk, SSD).

While the application has been described herein with various embodiments, other variations in the disclosed embodiments will be understood and realized by those skilled in the art by viewing the drawings, disclosure, and claims during the implementation of the claimed application. In the claims, the term "comprising" does not exclude other elements or steps, and "a" or "an" does not exclude a plurality. A single processor or another unit may implement several functions listed in the claims. The fact that certain measures are noted in the dependent claims that are different from each other does not mean that these measures cannot be combined to produce good results.

Though the present application has been described with specific features and embodiments, it is apparent that various modifications and combinations thereof may be made without departing from the spirit and scope of the present application. Accordingly, the specification and drawings are merely illustrative descriptions of the present application as defined by the appended claims and are deemed to cover any and all modifications, variations, combinations or equivalents within the scope of the present application. It is apparent that those skilled in the art may make various modifications and variations of the present application without departing from the spirit and scope of the present application. Thus, the application is intended to include such modifications and variations to the extent that they fall within the scope of the claims and equivalents thereof.

## Claims

1. A method for configuring a Basic Input Output System (BIOS) configuration item, wherein the method is applied to a server, the server comprises a Central Processing Unit (CPU) and an out-of-band controller, and the method is executed by the out-of-band controller, comprising:
determining content to be configured for a target configuration item in a BIOS configuration item, wherein the target configuration item is a configuration item that supports online modification in the BIOS configuration item; and
when the CPU runs an operating system (OS), sending a system management interrupt (SMI) signal to the CPU;
wherein the system management interrupt signal is configured to instruct the CPU to switch from running the OS to running the BIOS, so that the CPU acquires the content to be configured and configures the content of the target configuration item to the content to be configured when running the BIOS, and when the CPU completes configuration of the target configuration item, the CPU resumes running the OS.

2. The method according to claim 1, wherein the content to be configured for the target configuration item in the BIOS configuration item is determined, comprising:
sending interface configuration information to a terminal device, wherein the interface configuration information is configured to display a configuration interface by the terminal device, and the configuration interface comprises the target configuration item; and
receiving the content to be configured for the target configuration item sent by the terminal device, wherein the content to be configured is determined by the terminal device in response to a configuration operation for the target configuration item on the configuration interface.

3. The method according to claim 1, whereinthe content to be configured for the target configuration item in the BIOS configuration item is determined, comprising:
in response to a request from the terminal device, sending an identifier of the target configuration item to the terminal device; and
receiving the content to be configured for the target configuration item sent by the terminal device, wherein the content to be configured is determined by the terminal device based on the identifier of the target configuration item.

4. The method according to any one of claims 1 to 3, further comprising:
receiving a set of configuration items sent by the CPU, wherein the set of configuration items is a collection of items that support online modification in a current BIOS version, the set of configuration items includes the target configuration item, and the set of configuration items is sent during a boot process of the BIOS.

5. The method according to any one of claims 1 to 4, further comprising:
receiving a configuration result of the target configuration item returned by the CPU, wherein the configuration result is configured to indicate whether the configuration of the target configuration item succeeds or fails, and the configuration result is sent when the CPU runs the BIOS.

6. The method according to claim 5, **characterized in that** the server further comprises a BIOS chip, wherein the BIOS chip stores configuration content of the BIOS configuration item, further comprising:
receiving an acquisition request sent by the CPU, wherein the acquisition request is sent by the CPU during a BIOS boot process, and the acquisition request is configured to request the content configured of the target configuration item; and
when a configuration result indicates that the configuration of the target configuration item succeeds, sending the content to be configured to the CPU, wherein the content to be configured is used to modify the configuration content of the target configuration item in the BIOS chip to the content to be configured.

7. A method for configuring a Basic Input Output System (BIOS) configuration item, wherein the method is applied to a server, the server comprises a Central Processing Unit (CPU) and an out-of-band controller, and the method is executed by the CPU, comprising:
when the CPU runs an operating system (OS), receiving a system management interrupt (SMI) signal and performing following operations by the CPU based on a system management interrupt signal:
switching, by the CPU, from running the OS to running the BIOS;
when the CPU runs the BIOS, acquiring, by the CPU, content to be configured from the out-of-band controller and configuring content of a target configuration item as the content to be configured, wherein the target configuration item is a configuration item that supports online modification in a BIOS configuration item; and
when the CPU completes configuration of the target configuration item, resuming, by the CPU, running the OS.

8. The method according to claim 7, during a boot process of the BIOS, further comprising:
sending, by the CPU, a set of configuration items to the out-of-band controller, wherein the set of configuration items is a collection of configuration items that support online modification in a current BIOS version, and the set of configuration items includes the target configuration item.

9. The method according to claim 7 or 8, when the CPU runs the BIOS, further comprising:
sending, by the CPU, a configuration result of the target configuration item to the out-of-band controller, wherein the configuration result is configured to indicate whether the configuration of the target configuration item succeeds or fails.

10. The method according to claim 9, wherein the server further comprises a BIOS chip, the BIOS chip stores configuration content of the BIOS configuration item, and during a boot process of the BIOS, the method further comprises:
sending, by the CPU, an acquisition request to the out-of-band controller, wherein the acquisition request is configured to request the content configured of the target configuration item;
receiving, by the CPU, the content to be configured returned by the out-of-band controller; and
modifying, by the CPU, the configuration content of the target configuration item in the BIOS chip to the content to be configured.

11. A server, comprising a processor;
wherein the processor is connected to a memory, the memory is configured to store a computer-executable instruction, and the processor executes the computer-executable instruction stored in the memory, thereby enabling the server to implement the method according to any one of claims 1 to 6 or any one of claims 7 to 10.

12. A system for configuring a Basic Input Output System (BIOS) configuration item, comprising:
a central processing unit (CPU) and an out-of-band controller, wherein the CPU is connected to the out-of-band controller;
wherein the out-of-band controller is configured to implement the method according to any one of claims 1 to 6, and the CPU is configured to implement the method according to any one of claims 7 to 10.
